# EUROPEAN PATENT APPLICATION

(11) **EP 2 957 494 A1**
(43) Date of publication of application: **23.12.2015**
(21) Application number: 15170935.9
(22) Date of filing: 08.06.2015
(51) Int. Cl.: B62K 25/28, B62M 6/55

(54) **BICYCLE, PARTICULARLY ELECTRIC PEDAL ASSISTED BICYCLE**

(30) Priority: 18.06.2014 IT MI20141103
(71) Applicant: C.S.S.n.c. di Ciapponi P. e Soci, 23017 Morbegno (SO) (IT)
(72) Inventor: Ciapponi, Patrizio, 23017 Morbegno SO (IT)
(74) Representative: Bonvicini, Davide

(57) **Abstract**

A pedal-assisted bicycle comprising a frame (1) which is composed of at least one upper cross member (2) and one lower cross member (3) connected at an angle at one end thereof, and a seat tube (4) connecting the lower cross member to the upper cross member at the opposite end, said frame (1) having a substantially triangular plane shape, a tube (6) for housing the pedal axle (6a), which is formed at the junction between the seat tube (4) and the lower cross member (3) of the frame, an electric motor (8a) for assisted pedaling, a battery (14) for supplying electric power to said motor.

The bicycle frame also comprises a housing (7) for the electric motor. Said housing (7) is placed in the portion of the frame between the seat tube (4) and the lower cross member (3), above the pedal axle tube (6), and is fixed to said frame (1).

## Description

The present invention relates to a pedal-assisted bicycle comprising a frame which is composed of at least one upper cross member and one lower cross member connected at an angle at one end thereof, and a seat tube connecting the lower cross member to the upper cross member at the opposite end, said frame having a substantially triangular plane shape, a pedal axle-housing tube formed at the junction between the seat tube and the lower cross member, an electric motor for assisted pedaling, a rechargeable battery for supplying electric power to said motor and a drive system for transferring motion from the pedals to the rear wheel of the bicycle.

Electric motor-powered pedal-assisted bicycles are known in the art, in both traditional road and off-road versions. According to the prior art, the electric motor designed for assisted pedaling, is mounted to the frame by being fastened to the lower portion of the seat tube by means of traditional clamps or, on custom-made frames, by means of a specially designed support plate.

In both cases, such position of the electric motor for assisted pedaling has the drawback of exposing the motor to external obstacles, whereby the motor may be damaged due to possible collisions with these external obstacles.

Furthermore, such known position as mentioned above causes the structure of the bicycle to be affected by a geometric unbalance of the frame with respect to the central vertical plane which, in turn, will hinder the required accurate alignment between the front sprocket fixed to the pedal axle and the cluster of rear gear sprockets, thereby causing difficulties in chain drive transmission as well as a high risk that the chain will disengage from one or both sprockets.

The main object of the present invention is to obviate the above mentioned drawbacks, by providing a pedal-assisted bicycle in which the electric motor is placed in a protected position on the frame, and in which its position does not cause geometric unbalance to an extent that would affect drive transmission between the front sprocket and the rear gear sprockets.

This and other objects, as better explained hereinafter will be fulfilled by a pedal-assisted bicycle as defined in claim 1 hereinbelow, and a bicycle as defined in claim 5.

The invention will be now described in greater detail with reference to one embodiment thereof, given by way of illustration and without limitation, and shown in the annexed drawings, in which:
- Figure 1 shows a lateral schematic view of the bicycle frame with a motor housing and a pedal axle tube;
- Figure 2 shows a cross sectional view as taken along lines II-II of Figure 1;
- Figure 3 shows a lateral perspective view of the bicycle frame in a preferred embodiment including a case for the battery that supplies power to the motor;
- Figure 4 shows a lateral schematic and partially perspective view of the bicycle frame, comprising the rear wheel fork, the rear wheel being omitted;
- Figure 5 shows a further lateral schematic and partially perspective view of the bicycle frame, comprising the rear wheel fork, the rear wheel being omitted;
- Figure 6 shows a top schematic and partially perspective view of the bicycle frame, comprising the rear wheel fork, the rear wheel being omitted;

Referring to the above mentioned figures, the bicycle frame, generally designated by numeral 1, comprises an upper cross member 2, a lower cross member 4 and a seat tube 4, the seat being omitted because it is known per se.

The upper cross member 2 and the lower cross member 3 are connected at an angle, at one end thereof, referenced 2a and 3a respectively and impart with the seat tube 4 a substantially triangular plan shape to the frame.

A conventional bushing 5 is provided at the connecting ends of the upper cross member and the lower cross member, for the front wheel fork, the front wheel being omitted in the drawings.

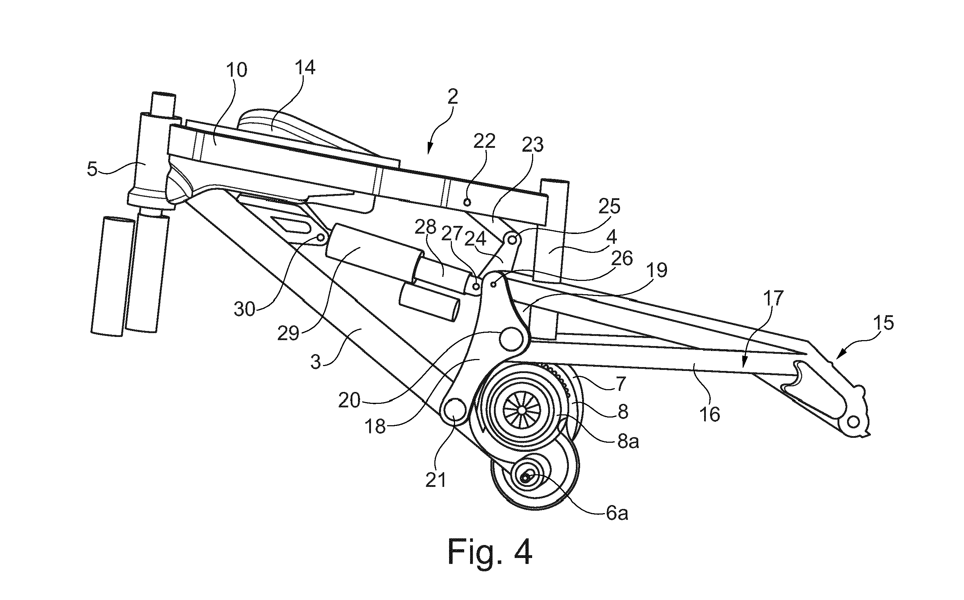

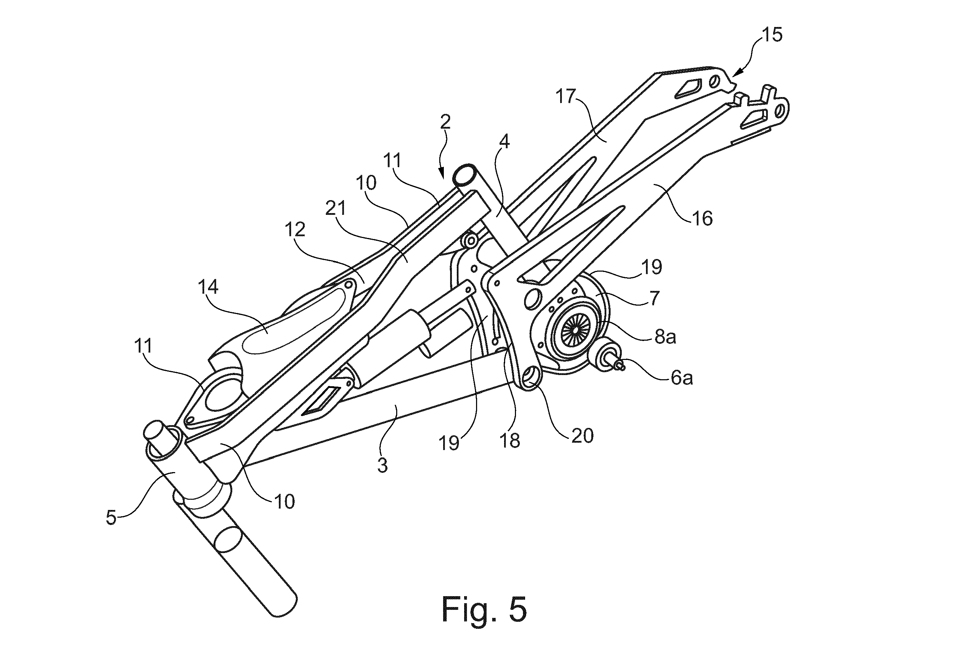

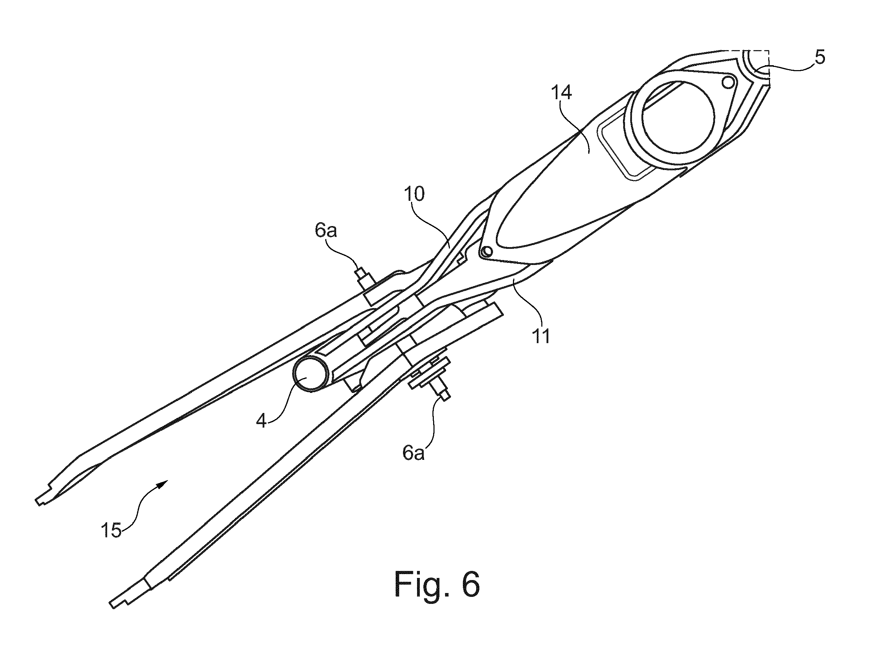

At the end 3b of the lower cross member 3 with which the latter is connected to the seat tube 4, the frame 1 comprises a tube 6 for housing the pedal axle 6a (see Figures 4, 5, 6), the pedals being of conventional type and hence being omitted in the drawings, as well as a housing 7 whose cylindrical cavity 8 is designed to receive an electric motor 8a (see Figures 4, 5, 6) for assisted pedaling, which is connected in a conventional manner to the bicycle pedal axle 6a.

The cavity 8 has its longitudinal axis X-X parallel to and offset from the longitudinal axis Y-Y of the tube 6, and has an abutment 9 for axial positioning of the electric motor and fastening thereof within the cavity 8.

The housing 7 and its cavity 8 allow the electric motor for assisted pedaling to be both protected from external obstacles and allowed to be placed in a geometrically balanced position on the frame 1.

The presence of the housing 7 further provides the advantages of allowing removal of the motor, while affording normal use of the bicycle, and of considerably reducing the center-to-center distance between the wheel axle and the pedal axle 6a. A further advantage is given by the possibility of maintaining the geometries of a standard bicycle in terms of length and height from the ground.

Furthermore, the use of axial bushings arranged along the axis X-X, allows the motor 8a to be mounted in a central position that is most suited for chain drive transmission members, thereby ensuring proper alignment between the pedal assembly sprocket and the gear sprockets associated with the rear wheel of the bicycle.

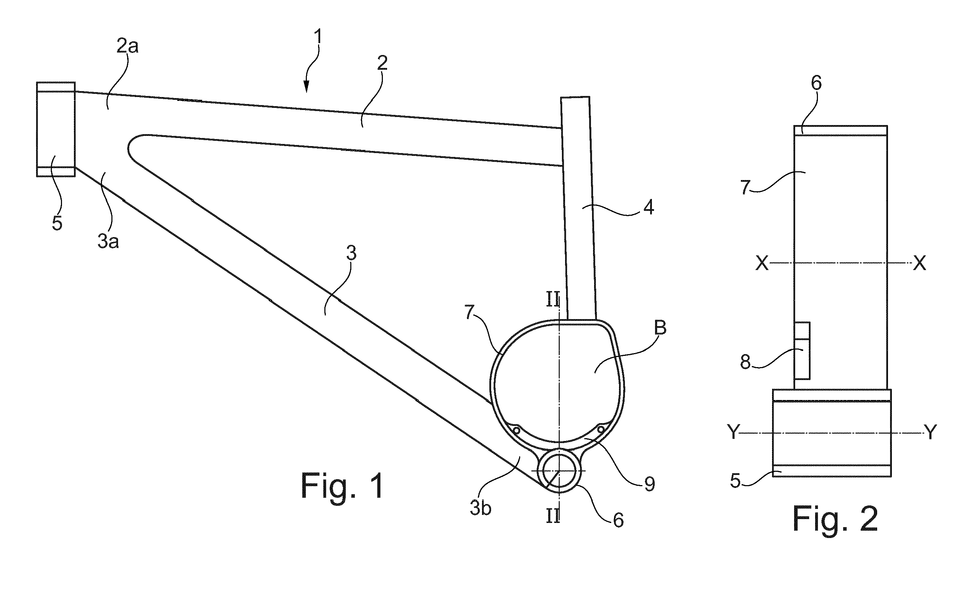

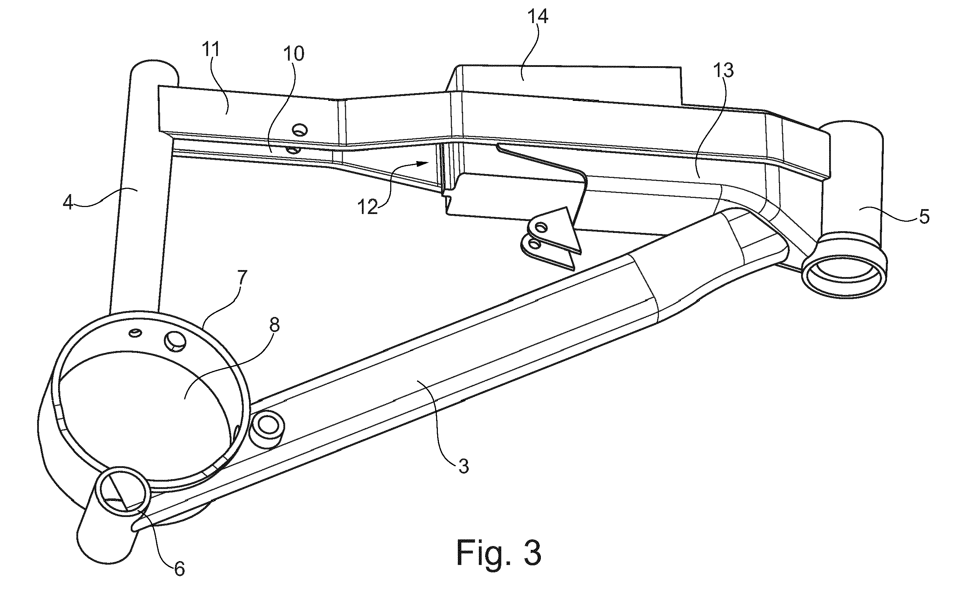

Referring to Figure 3, the frame, which is only schematically shown in Figure 1 in a preferred embodiment thereof, has the upper cross member 2 consisting of a pair of adjacent beams, referenced 10 and 11 respectively which open apart in a section of their length thereby forming a space 12 for receiving a case 13 for the battery 14, possibly of rechargeable type, that supplied power to the motor.

According to a variant construction embodiment, not shown, the battery case may be mounted to the lower cross beam 3 instead of the upper cross beam 2. For this purpose, the lower cross beam may consist of a pair of beams like the beams 10 and 11 of the upper cross beam.

According to the preferred embodiment, as shown in Figure 3, the frame 1 may be at least partially formed by casting, with direct incorporation of the motor housing 7 and the pedal tube 6.

Figures 4, 5 and 6 show that a rear wheel fork, generally referenced 15, is connected to the frame 1 by an articulated joint, the rear wheel not being shown. It shall be noted that the fork 15 may be also mounted to a standard bicycle, without assisted pedaling. This fork comprises a pair of adjacent rods 16 and 17 connected to respective end plates 18 and 19 and transversely joined together by a bar 20. The end plates 18 and 19 are connected to the lower cross bar 3 at the hinge point 21 and to the upper cross bar 2 at the hinge point 22 with the interposition of a pair of mutually hinged rods, referenced 23 and 24.

While the rod 23 is in the form of a straight tie rod, the rod 24 has a triangular configuration, with the vertex 25 connected to the rod 23 by an articulated joint, the vertex 26 connected to the terminal ends 18 and 19 by an articulated joint and the vertex 27 connected to the rod 28 of a shock absorber 29. The latter is connected to the lower cross beam 3 of the frame 1 by an articulated joint 30 and a mounting plate 31.

With the above mechanism, the oscillations imparted to the fork 15 by the rear wheel of the bicycle, in operation, are transferred to the piston 28 of the shock absorber by substantially straight displacements of the connection point 27, which will provide the advantage of avoiding twists that might damage the frame and affect the balance of the bicycle. The skilled person will appreciate that this mechanism may be also used in a bicycle that has no electric motor.

Any dimensions and materials may be used herein, as needed, without departure from the scope of the invention as disclosed above and claimed below.

## Claims

1. Pedal-assisted bicycle comprising:
- a frame (1) composed of at least one upper cross member (2) and a lower cross member (3), which are connected at an angle at one end thereof, and a seat tube (4) connecting the lower cross member (3) to the upper cross member (2) at an opposite end, said frame (1) having a substantially triangular plane shape, said frame (1) comprising a tube (6) for housing a pedal axle (6a), which is formed at the junction of the seat tube (4) with the lower cross member (3) of the frame (1),
- an electric motor (8a) for assisted pedaling,
- a battery (14) for supplying electric power to the electric motor (8a),
**characterized in that** it comprises a housing (7) for the electric motor (8a), said housing (7) being placed in the portion of the frame between the seat tube (4) and the lower cross member (3), above the tube (6) for the pedal axle (6a), said housing (7) for the electric motor being fixed to the frame (1).

2. A pedal-assisted bicycle as claimed in claim 1, wherein said housing (7) for the electric motor has a cylindrical cavity (8) whose longitudinal axis (X-X) is parallel to and offset from the longitudinal axis (Y-Y) of the pedal axle tube (6).

3. A pedal-assisted bicycle as claimed in claims 1 and 2, wherein said housing (7) for the electric motor comprises a shoulder (9) within the cylindrical cavity (8) for abutment and axial fixation of the electric motor (8a).

4. A pedal-assisted bicycle as claimed in any of claims 1 to 3, **characterized in that** the upper cross member (2) of the frame (1) comprises a pair of adjacent beams (10, 11) which form a space (12), at least at one section of their length, for receiving a case (13) for the battery (14) that supplies power to the electric motor (8a).

5. A bicycle, particularly a pedal-assisted bicycle, comprising a frame (1) composed of at least one upper cross member (2) and a lower cross member (3), which are connected at an angle at one end thereof, and a seat tube (4) connecting the lower cross member (3) to the upper cross member (2) at an opposite end, said frame (1) having a substantially triangular plane shape, said frame (1) comprising an oscillating fork (15) providing suspension for the rear wheel and a shock absorber (29) with a piston (28) for damping the oscillations imparted by the wheel to the fork (15), said fork (15) being connected by a swivel joint to a point (21) of the lower cross member (3) of the frame (1) near the junction of the lower cross beam (3) with the seat tube (4) and by a swivel joint around a point (22) of the upper cross member (2) of the frame (1), with the interposition of a set of levers (23, 24) connected by an articulated joint with a pin (25), one (24) of said levers (23, 24) having a triangular configuration with three vertices, one vertex (27) of said triangular configuration being connected to one end of the piston (28) of the shock absorber (29) damping fork oscillations.

6. A bicycle as claimed in claim 5, further comprising a tube (6) for housing a pedal axle (6a), which is formed at the junction of the seat tube (4) with the lower cross member (3) of the frame (1),
- an electric motor (8a) for assisted pedaling,
- a battery (14) for supplying electric power to the electric motor (8a),
- a housing (7) for the electric motor (8a),
said housing (7) being placed in the portion of the frame between the seat tube (4) and the lower cross member (3), above the tube (6) for the pedal axle (6a), said housing (7) for the electric motor being fixed to the frame (1).
